# FASCICULE DE BREVET EUROPEEN

(11) **EP 1 712 422 B1**
(45) Date de publication et mention de la délivrance du brevet: **21.07.2010**
(21) Numéro de dépôt: 06290614.4
(22) Date de dépôt: 14.04.2006
(51) Int. Cl.: B60R 11/02

(54) **Pièce de renfort d'un élément de carrosserie**
Verstärkungsteil eines Karosserieteils
Reinforcement piece of a vehicle body component

(30) Priorité: 15.04.2005 FR 0503799
(43) Date de publication de la demande: 18.10.2006
(73) Titulaire: Compagnie Plastic Omnium, 69007 Lyon (FR)
(72) Inventeur: Grando, Jerome, 38390 Vertrieu (FR); Cordebar, Francis, 69400 VILLEFRANCHE SUR SAONE (FR)
(74) Mandataire: Remy, Vincent Noel Paul

(56) Documents cités:
- WO-A-96/09941
- DE-A1- 10 235 184
- DE-C1- 19 636 584
- US-A1- 2002 178 584

## Description

La présente invention concerne une pièce de renfort d'un élément de carrosserie de véhicule automobiles.

Dans les pare-chocs avant de véhicules automobiles, on connaît déjà les pièces de renfort de bouclier, notamment les renforts centraux, destinés à empêcher le cloquage pour donner une impression de meilleure qualité et de solidité à l'utilisateur.

On connaît également une antenne GPS, qui doit être montée sur une partie métallique du véhicule, par exemple sur son moteur. Cette antenne GPS est intégrée au véhicule lors d'une opération de montage spécifique.

Cette opération de montage de l'antenne GPS, qui est optionnelle, représente un coût non négligeable, nécessitant la création d'un poste de montage spécifique sur la chaîne principale et l'emploi de la main-d'oeuvre associée.

Le document DE 102 35 184 A décrit une pièce de renfort selon le préambule de la revendication 1.

L'invention a notamment pour but de remédier à ces inconvénients en fournissant une pièce de renfort capable d'accueillir une antenne GPS et permettant d'intégrer celle-ci à l'avant du véhicule sans avoir à la rapporter séparément sur le véhicule.

A cet effet, l'invention a pour objet une pièce de renfort d'un élément de carrosserie en matière plastique de véhicule automobile selon la revendication 1.

Ainsi, l'antenne GPS peut être montée à l'avance dans le dégagement puis rapportée sur le véhicule avec son support, qui peut être la pièce de renfort, ce qui évite de prévoir un poste spécifique sur la chaîne principale de montage. Le dégagement n'est pas toujours ménagé dans le support auquel est fixé l'antenne : celui-ci peut en effet être fixé sur la pièce de renfort, par exemple directement sur la plaque métallique, mais aussi sur l'élément de carrosserie, au-dessus de ladite plaque.

La plaque métallique combine deux fonctions : d'une part, elle fournit un plan de masse permettant le fonctionnement de l'antenne, laquelle est normalement prévue pour être fixée sur une partie métallique. D'autre part, elle apporte sa rigidité à la pièce de renfort, laquelle, du fait du dégagement, présente une rigidité moindre que celle d'une pièce de renfort qui ne comporterait pas de dégagement. Ainsi, la plaque métallique compense la moindre rigidité de la pièce de renfort, laquelle conserve la même efficacité d'anti-cloquage.

L'invention propose également une solution évitant d'avoir à intégrer systématiquement la plaque métallique à la pièce de renfort. Ainsi, dans un mode de réalisation particulier, la pièce de renfort comprend un organe de soutien cassable situé au voisinage du dégagement. Cet organe de soutien peut être soit rompu, dans le cas où une plaque métallique est rapportée sur la pièce de renfort, soit conservé, dans le cas où aucune plaque n'est fixée.

Ce mode de réalisation présente l'avantage que la rigidité de la pièce de renfort n'est pas excessivement accrue par la présence simultanée de la plaque et de l'organe de soutien, ce qui préserve les piétons en cas de choc. En effet, dans l'hypothèse où l'élément de carrosserie est un bouclier avant de pare-chocs, les piétons pourraient être gravement blessés, par exemple à la hanche, si le bouclier présentait un excès de rigidité.

En d'autres termes, l'organe de soutien est destiné à compenser le défaut de rigidité dû à l'absence de la plaque, mais peut être éliminé de manière à ne pas accroître excessivement la rigidité de la pièce de renfort en présence de la plaque.

Un avantage de cette pièce de renfort avec organe de soutien cassable est que l'on peut fabriquer un modèle unique de pièce de renfort, sans se soucier des caractéristiques optionnelles qu'elle présente -avec ou sans plaque-. Cela permet de réduire les coûts de production, un seul moule étant alors nécessaire, et de simplifier la gestion des stocks de pièces de renfort.

L'organe de soutien doit donc être cassé pour chaque véhicule pour lequel une antenne GPS est intégrée sous l'élément de carrosserie.

Ainsi, dans un mode de réalisation particulier, l'organe de soutien est conformé de manière à gêner la mise en place de l'antenne dans le dégagement de la pièce de renfort, et de manière que la rupture de cet organe de soutien libère le dégagement ménagé pour l'antenne.

Ainsi, la mise en place de l'antenne n'est pas possible tant que l'organe de soutien n'est pas cassé, ce qui constitue un moyen efficace de garantir la sûreté de la pièce de renfort.

De plus, l'organe de soutien est dimensionné, dans un mode particulier de réalisation, de manière à être manuellement cassable.

Ceci permet également de réduire les coûts supplémentaires que pourraient induire l'intégration d'une antenne dans l'élément de carrosserie, puisque aucun outil supplémentaire n'est nécessaire pour réaliser cette opération.

De manière optionnelle, l'organe de soutien est rendu cassable au moyen d'une entaille transversale, formée au moment de son moulage.

Le rendre facilement cassable ne nécessite alors pas d'étapes supplémentaires sur la chaîne de montage.

De manière optionnelle, l'élément de carrosserie est un bouclier de pare-chocs avant.
L'invention sera mieux comprise à la lecture de la description qui va suivre , donnée uniquement à titre d'exemple et faite en se référant aux dessins annexés dans lesquels :
- la figure 1 est une vue de l'extérieur d'un renfort central de bouclier avant classique,
- la figure 2 est une vue de l'extérieur d'un renfort central de bouclier avant selon un mode de réalisation de l'invention et intégrant une antenne GPS,

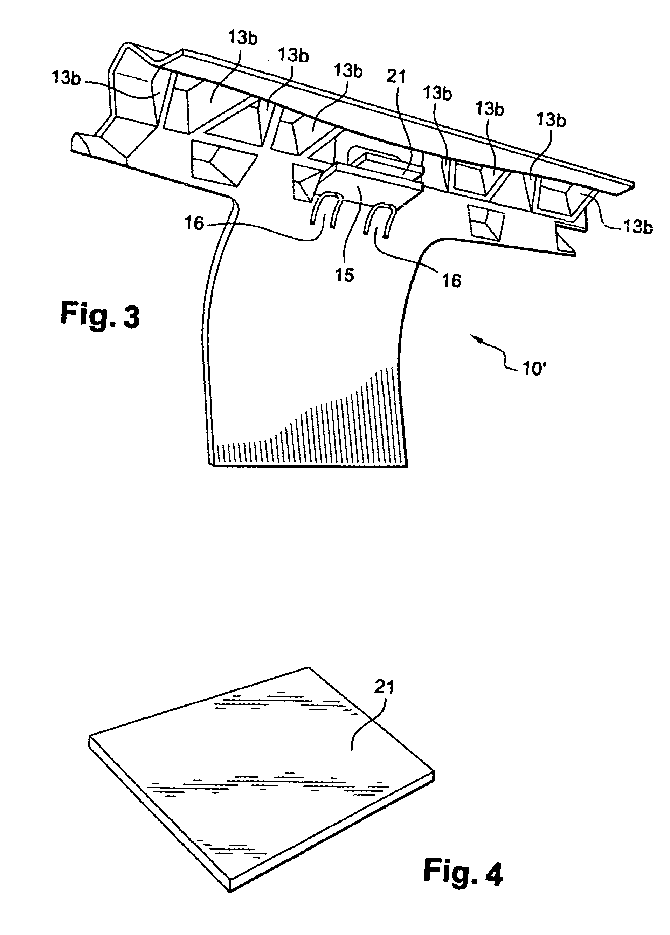

- la figure 3 est une vue de l'intérieur du renfort central de la figure 2,
- la figure 4 représente une plaque métallique utilisable selon l'invention,
- la figure 5 est un agrandissement de l'intérieur d'un renfort central de bouclier avant selon un autre mode de réalisation de l'invention, dans le cas où l'antenne n'est pas intégrée au véhicule.

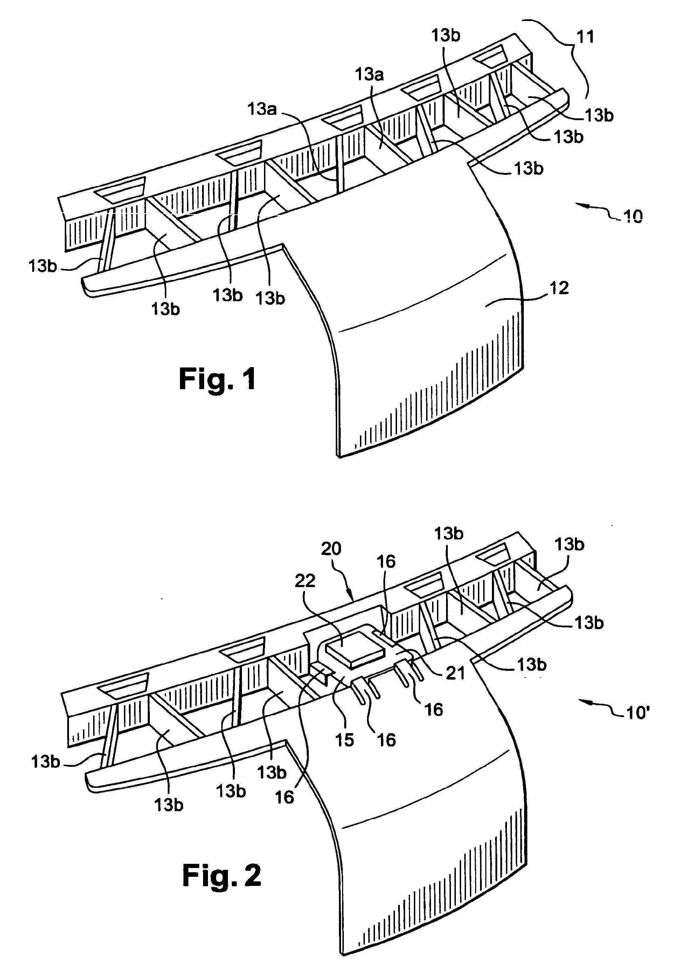

Sur la figure 1, on voit un renfort central 10 d'un bouclier d'un véhicule automobile. Ce renfort central 10, qui constitue une pièce de renfort selon l'invention, comporte une partie inférieure 12 et une partie supérieure 11 de soutien d'une peau de pare-chocs (non représentée sur les dessins). La partie supérieure 11 de ce renfort central 10 comporte des nervures de renfort 13a, 13b dont la fonction est d'empêcher le cloquage de la peau.

Le cloquage est un enfoncement de la peau de pare-chocs résultant d'une pression appliquée sur cette peau, par exemple par un doigt d'un utilisateur.

La figure 2 présente un renfort central 10', de même type mais modifié selon l'invention. Il comporte toujours des nervures 13b. Cependant, les nervures centrales 13a de la figure 1, sont manquantes : elles font place à un dégagement 20, qui est apte à supporter une plaque métallique 21, elle-même servant de support et de plaque de masse à une antenne GPS 22 constituant un équipement électrique au sens de l'invention.

La plaque métallique 21 est fixée au renfort 10' dans le fond 15 du dégagement 20 par des moyens de fixation, ces moyens étant, dans l'exemple, quatre pattes d'encliquetage 16 mais pouvant être, selon différents modes de réalisations de l'invention, des moyens de vissage, de collage...

L'inertie de la plaque métallique 21 confère au renfort central 10' une rigidité similaire à celle du renfort central 10 en dépit de l'absence de la nervure centrale 13a.

Aucun organe de soutien (30) n'est pas visible sur cette figure.

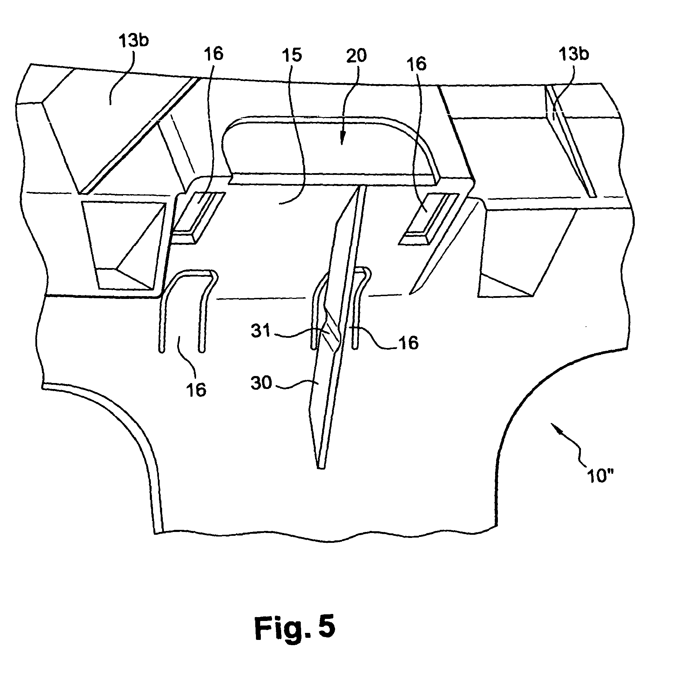

Sur la figure 5, on voit un organe de soutien 30 en forme de béquille, issu de moulage avec le renfort. L'organe de soutien et le fond 15 forment une console qui présente une rigidité suffisante pour résister à une force exercée par un utilisateur sur le bouclier (non représenté).

L'ajout de l'organe de soutien 30 permet donc au renfort central 10" de remplir la fonction d'anti-cloquage, même lorsque la plaque métallique 21 n'est pas fixée au renfort 10".

L'organe de soutien 30 est cassable dans le cas où la plaque métallique 21 est présente. Ainsi, la rigidité du renfort 10" n'est jamais excessive, ce qui serait dangereux dans le cas d'un choc du véhicule avec un piéton.

A cet effet, une entaille transversale 31 est formée dans l'organe de soutien 30. Cette entaille fragilise l'organe 30 lorsque celui-ci est sollicité en traction ou en flexion mais moins lorsqu'il est en compression, comme cela est le cas lorsqu'une force est exercée sur la peau de pare-chocs.

Par conséquent, bien qu'il soit possible de casser manuellement l'organe de soutien 30 lors du montage en le sollicitant en flexion, une force manuelle exercée par un utilisateur sur la peau de pare-chocs, qui sollicite l'organe de soutien 30 en compression, n'est pas suffisante pour entraîner sa rupture.

L'invention permet donc à un équipement électrique d'être intégré de manière optionnelle dans un bouclier avant de véhicule automobile, fabriqué à l'aide d'une série de moules unique, tout en permettant au bouclier avant de remplir de manière efficace une fonction d'anti-cloquage et d'assurer la sécurité du véhicule et de son environnement, par exemple lors d'un choc.

On notera enfin que le mode de réalisation décrit dans l'exemple ci-dessus n'est pas limitatif et que l'invention peut être réalisée de différentes façons

## Revendications

1. Pièce de renfort (10',10") d'un élément de carrosserie en matière plastique de véhicule automobile comportant un dégagement (20)
et des moyens (16) de fixation d'une plaque métallique (21) agencés sur la pièce de renfort (10',10") de façon à maintenir ladite plaque (21) en dessous du dégagement (20), **caractérisée en ce que** le dégagement (20) est destiné à accueillir une antenne GPS (22).

2. Pièce de renfort selon la revendication 1, dans laquelle les moyens de fixation de la plaque métallique sont des moyens de fixation (16) par encliquetage.

3. Pièce de renfort selon l'une quelconque des revendications précédentes, comprenant un organe de soutien (30) cassable, situé au voisinage du dégagement (20).

4. Pièce de renfort selon la revendication 3, l'organe de soutien (30) cassable étant conformé de manière à gêner la mise en place de l'équipement électrique (22) dans le dégagement (20) de la pièce de renfort (10',10"), et de manière que la rupture de cet organe de soutien (30) libère le dégagement (20) ménagé pour l'équipement électrique (22).

5. Pièce de renfort selon l'une des revendications 3 et 4, l'organe de soutien (30) étant dimensionné de manière à être manuellement cassable.

6. Pièce de renfort selon l'une des revendications 3 à 5, l'organe de soutien (30) comportant une entaille transversale (31), formée au moment du moulage.

7. Ensemble d'une pièce de renfort et d'une plaque métallique (21), **caractérisé en ce que** la pièce de renfort (10', 10") est selon l'une quelconque des revendications précédentes.

## Claims

1. A reinforcement piece (10', 10") for a motor vehicle bodywork element made of plastics material, the reinforcement piece including an empty space (20), and means (16) for securing a metal plate (21), said means being arranged on the reinforcement piece (10', 10") in such a manner as to hold said plate (21) beneath the empty space (20), **characterized in that** the empty space (20) is for receiving a GPS antenna.

2. A reinforcement piece according to claim 1, wherein the means for securing the metal plate secure the plate by snap-fastening.

3. A reinforcement piece according to any one of the preceding claims, including a breakable support member (30) situated in the vicinity of the empty space (20).

4. A reinforcement piece according to claim 3, the breakable support member (30) being shaped in such a manner as to impede putting the electrical equipment (22) into place in the empty space (20) of the reinforcement piece (10', 10"), and in such a manner that breaking said support member (30) releases the empty space (20) provided for the electrical equipment (22).

5. A reinforcement piece according to claim 3 or 4, wherein the support member (30) is dimensioned in such a manner as to be breakable manually.

6. A reinforcement piece according to any one of claims 3 to 5, in which the support member (30) includes a transverse notch (31) formed at the time of molding.

7. Assembly of a reinforcement piece and of a metal plate (21), **characterized in that** the reinforcement piece is according to any one of the preceding claims.

## Patentansprüche

1. Verstärkungsteil (10', 10") eines Karosserieteils aus Kunststoff für Kraftfahrzeug, das eine Aussparung (20) und Mittel (16) zum Befestigen einer Metallplatte (21), die auf dem Verstärkungsteil (10', 10") derart eingereichtet sind, dass sie die Platte (21) unten an der Aussparung (20) halten, aufweist, **dadurch gekennzeichnet, dass** die Aussparung (20) dazu bestimmt ist, eine GPS-Antenne (22) aufzunehmen.

2. Verstärkungsteil nach Anspruch 1, bei dem die Befestigungsmittel der Metallplatte Befestigungsmittel (16) durch Einrasten sind.

3. Verstärkungsteil nach einem der vorhergehenden Ansprüche, das ein brechbares Stützorgan (30), das sich in der Nähe der Aussparung (20) befindet, aufweist.

4. Verstärkungsteil nach Anspruch 3, wobei das brechbare Stützorgan (30) derart ausgebildet ist, dass das Anbringen der elektrischen Ausrüstung (22) in der Aussparung (20) des Verstärkungsteils (10', 10") behindert wird und derart, dass das Brechen dieses Stützorgans (30) die Aussparung (20), die für die elektrische Ausrüstung (22) eingerichtet ist, freilegt.

5. Verstärkungsteil nach einem der Ansprüche 3 und 4, wobei das Stützorgan (30) derart dimensioniert ist, dass es manuell brechbar ist.

6. Verstärkungsteil nach einem der Ansprüche 3 bis 5, wobei das Stützorgan (30) eine Querausnehmung (31), die im Augenblick des Formens ausgebildet wird, aufweist.

7. Einheit aus einem Verstärkungsteil und einer Metallplatte (21), **dadurch gekennzeichnet, dass** das Verstärkungsteil (10', 10") nach einem der vorhergehenden Ansprüche gestaltet ist.
